(19) Europäisches Patentamt
European Patent Office
Office européen des brevets

(11) Publication number: **0 182 573 A2**

(12) **EUROPEAN PATENT APPLICATION**

(21) Application number: **85308199.0**

(22) Date of filing: **11.11.85**

(51) Int. Cl.⁴: **C 03 C 17/00**, H 01 K 1/32

(30) Priority: **15.11.84 GB 8428881**

(43) Date of publication of application: **28.05.86 Bulletin 86/22**

(84) Designated Contracting States: **DE FR NL**

(71) Applicant: **UNITED KINGDOM ATOMIC ENERGY AUTHORITY, 11 Charles II Street, London SW1Y 4QP (GB)**

(72) Inventor: **Cairns, James Anthony, 22 Haywards Close Garston Lane, Wantage Oxfordshire (GB)**
Inventor: **Prentice, Thomas Campbell, 2 The Lane, Chilton Oxfordshire (GB)**
Inventor: **Keown, Samuel Robert, Ty Gwyn 76 Spring Lane, Sprotbrough Doncaster DN5 7RL (GB)**

(74) Representative: **Mansell, Keith Rodney, Patents Branch United Kingdom Atomic Energy Authority 11 Charles II Street, London SW1Y 4QP (GB)**

# (54) Light scattering coatings.

(57) A glass surface, for example of a glass article such as a glass, electric light bulb is provided with a surface coating for endowing the surface with light scattering properties by (i) applying a precursor (e.g. a silica precursor) for a coating material, then (ii) treating the precursor to form an adherent coating. In step (i), the precursor also contains a second material convertible under the conditions of step (ii) to give a light scattering phase in the coating. The second material may be a salt (e.g. $NaHCO_3$ or $CH_3COONH_4$) decomposable in step (ii) to a gaseous product to generate pores as the light scattering phase. Alternatively, the second material may be a salt (e.g. NaCl) that is provided in solution in step (i) and is crystallisable in step (ii) to generate light scattering crystals in the coating.

EP 0 182 573 A2

# Light Scattering Coatings

This invention relates to the provision of surface coatings on glass surfaces, for example of articles such as glass, electric light bulbs, for providing light scattering properties.

It is known to treat the surface of glass, electric light bulbs in such a way as to modify the optical properties of the surface. For example, the surface may be treated in order to scatter light issuing from within the bulb thereby to create a more pleasing and relaxing effect to the eye. A specific example of such surface treatment is the production of so-called 'pearl' or 'frosted' light bulbs wherein the interior of a bulb is sprayed with a hydrofluoric acid to etch the internal surface of the bulb. Treatment with acid in this way is, however, a hazardous procedure in terms of health and safety; also, there may be major effluent disposal problems.

The invention is concerned with ameliorating the above-mentioned problems of acid etching and generally enabling glass surfaces to be endowed with light scattering properties. It includes a method of coating a glass surface to provide light scattering properties which comprises the steps of

(i) applying a precursor for a coating material to the surface; and

(ii) treating the applied precursor to form an adherent coating on said surface, wherein, in step (i), a second material is also applied to the surface, the second material being convertible under the conditions of step (ii) to form a light scattering phase in the adherent coating.

"Convertible" includes any change whether chemical or physical from the second material as present in step (i) provided that a light scattering phase is ultimately produced in the final adherent coating, e.g. to give rise to discontinuities therein.

The invention enables light scattering coatings to be provided without the use of hydrofluoric acid and by means of a single application stage (i.e. step (i)) process. It is applicable, for example, to the coating of glass, electric light bulbs for scattering light issuing from within the bulb but is also applicable to the coating of other glass articles such as shades and panels to endow them with light scattering properties.

Step (i) may be carried out by methods known in the art such as pouring the precursor onto the surface (e.g. when in the form of a bulb), followed by draining, or by spraying.

If other optical effects such as colour are required in the coating, appropriate additional ingredients, known in the art for producing the required effect, may be included with the precursor and the second material in step (i).

In a first embodiment of the invention, the second material is decomposable, at least in part, under the conditions of step (ii) to generate light scattering pores, as the light scattering phase, in the adherent coating. The light scattering pores may be enclosed pores within the coating (i.e. in the nature of bubbles) and/or may be cavities in the surface of the coating. Their size, shape and distribution may be within a wide range provided that they are capable of giving rise to acceptable light scattering properties.

In the first embodiment, the second material is preferably a water-soluble salt decomposable to a gaseous product at a temperature in the range 100°C to 200°C. This is because conversion of many suitable precursors to form an adherent coating (step (ii)) can be effected at such temperatures. Examples of suitable water soluble salts are hydrogen carbonates such as sodium hydrogen carbonate and potassium hydrogen carbonate, and ammonium salts such as ammonium acetate. If desired, more than one such water soluble salt may be incorporated.

Such water-soluble salts may be incorporated in the precursor in the form of an aqueous solution thereof to give a mix which is applied to the surface in carrying out step (i). Account has to be taken of factors such as the viscosity of the mix and its drain time in order to achieve a desired final coating, e.g. in terms of its thickness, evenness and obscuration properties. Where such salts are used, step (ii) is carried out by heat treating, the profile of such treatment also influencing the above-mentioned properties of the final coating. For economic reasons, heat treating should be as rapid as possible and could therefore advantageously be carried out in a profiled tunnel kiln.

In a second embodiment of the invention, the second material is provided in solution in step (i) and is crystallisable under the conditions of step (ii) to generate light scattering crystals in the adherent coating. The size, shape and distribution of the crystals may be within a wide range provided that they are capable of giving rise to acceptable light scattering properties. Examples of suitable second materials in step (i) are non-decomposable salts in aqueous solution. Sodium chloride is a preferred such salt as it has a strong crystal structure. To control the size of the crystals

produced, desirably of the order of microns, it may be necessary to include a nucleating agent such as glass powder in the mixture in step (i). Otherwise the size of the crystals produced may be too large to produce a desired optical effect.

In the second embodiment, the second material may comprise more than one salt in solution. For example, boron(111) oxide may be included with sodium chloride in order to give a change in visual appearance compared with that resulting from use of sodium chloride itself. If desired, the non-decomposable salt may be dissolved out of the final coating to generate light scattering pores therein.

The coating material must be capable of adhesion to the surface appropriate to its intended use. It must also be optically compatible with the surface and have optical properties that do not deleteriously affect the function of the article and the light scattering phase. An example of a coating material is silica, either alone or in combination with alumina.

A "precursor" is a material capable of conversion to the coating material under the conditions of step (ii) and is preferably a liquid precursor. An example of such a precursor is a water-soluble silicone such as a silicone glycol copolymer and an example of such a copolymer is dimethicone copolyol which has the structural formula:

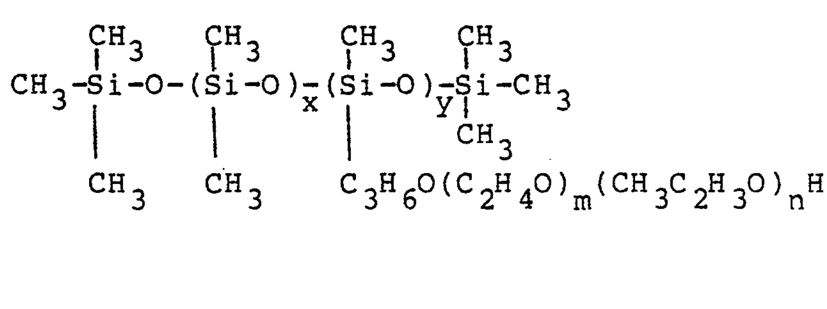

Dimethicone copolyols and related substances are sold as surfactants by Dow Corning Corporation under the trade names Dow Corning 190, Dow Corning 193 and Dow Corning Q2-5097 fluids. Such a water soluble silicone may be used in admixture with water. The above-mentioned silicones are readily decomposable to silica on heating, giving little or no impurities.

The liquid precursor may be used in admixture with an aqueous colloidal dispersion of a refractory oxide such as a boehmite sol or a silica sol an example of the latter being "Syton" X30 marketed by Monsanto Chemicals Limited.

Improvements in the method of the invention may be obtained by ageing such a precursor mix (e.g. for up to three months) before adding any salt thereto. A similar effect may, however, be achieved by adjusting the pH of the sol to about 2.5 by acid addition (e.g. diluted nitric acid) and ageing for a shorter time (e.g. 10 days). Improvements obtained include reduced drain time, reduced initial firing temperature, (e.g. 100-125°C) and reduced final firing temperature (e.g. not more than 430°C). The latter is important since, where the coating includes silica, its translucency depends on the silica not being overheated. Also, when an aged mix is used, addition of a glass powder is facilitated. Such an addition may enable a bulb to be produced which is visually attractive when illuminated without significantly affecting the light output of the bulb.

Several ways of carrying out the invention will now be described, by way of example only.

EXAMPLE 1

"Syton X 30" (Registered Trade Mark of Monsanto

Chemicals Ltd) silica sol (400g) was dispersed with Dow Corning 193 silicone glycol copolymer (300 g) with stirring to give a viscous liquid. This was allowed to stand in a stoppered bottle for two days to allow air bubbles to escape to give a precursor liquid.

Ammonium acetate (3 g) was dissolved in water (40 g) and the solution added to the precursor liquid (60 g). This gave a mixture of viscosity 40 - 60 cp depending on the ambient temperature. The mixture was washed around the inside of a transparent glass electric light bulb until all of its internal surface was covered and then allowed to drain for 20 - 30 seconds. The bulb was immediately placed in an oven at 150°C and the temperature raised to 500°C to remove any residual organic material. The heat treatment converted the precursor to silica and caused the ammonium acetate to decompose to generate bubbles in the silica coating. The result was a bulb with a thin 'pearl' effect coating of attractive appearance.

EXAMPLE 2

The procedure of Example 1 was repeated with the exception that sodium hydrogen carbonate (3 g) and ammonium acetate (5 g) in water (20 ml) were added to the precursor liquid (60 g) and dissolved therein. The coating produced was denser than that produced in Example 1 and had improved light scattering properties.

EXAMPLE 3

A mixture of the following constituents was prepared:

Dow-Corning 193 silicone glycol copolymer (300 g), "Syton X 30" silica sol (250 g), fine 1 - 3 μm glass powder (4 g), sodium chloride (15 g) and water (150 ml). The mixture was washed around the inside of a transparent, glass electric

light bulb until all of its surface was covered and then allowed to drain for 10 - 12 seconds. The bulb was then flash dried in an oven at 200°C and finally fired at 450°C. The result was a bulb having an even white coating.

EXAMPLE 4

The procedure of Example 3 was repeated with the exception that the mixture also contained boron(111) oxide ( 5 g). The result was a bulb having a more transparent coating than that produced in Example 3.

In Examples 1 and 2, a non-silicone surfactant can be used in place of Dow-Corning 193 and in Example 3 and 4, potassium or sodium silicate can be used in place of Dow Corning 193 and silica sol.

EXAMPLE 5

"Syton X 30" silica sol (270g) was dispersed with Dow-Corning 193 silicone glycol copolymer (300 g) with stirring and the resulting mixture allowed to age for 3 months.

A solution of ammonium acetate (12 g) in water (20 ml) was added to the above mixture (60 g) to give a clear liquid which was poured onto the inside of a transparent, glass electric light bulb and allowed to drain for 6 seconds to give a coating of the liquid. The bulb was immediately dried by placing in an oven at 100°C and then fired at 390°C. The bulb then had a coating which was very similar in appearance and performance to that of a standard, commerciually available 'pearl' bulb.

EXAMPLE 6

The procedure of Example 5 was repeated with the

exception that fine glass powder (1 g; size 4 - 6 μm) was added uniformly to the mixture. The bulb produced had a similar appearance, when unlit, to that of a standard 'pearl' bulb. When lit, all of the inside surface of the bulb was illuminated giving a pleasing visual effect. This contrasts with the appearance of a standard 'pearl' bulb when lit which gives rise to an illuminated region in the vicinity of the filament surrounded by a darker region.

Claims

1. A method of coating a glass surface to provide light scattering properties which comprises the steps of

(i) applying a precursor for a coating material to the surface, and

(ii) treating the applied precursor to form an adherent coating on the surface, characterised in that, in step (i), a second material is also applied to the surface, the second material being convertible under the conditions of step (ii) to form a light scattering phase in the adherent coating.

2. A method as claimed in claim 1 wherein the second material is decomposable, at least in part, under the conditions of step (ii) to generate light scattering pores, constituting the light scattering phase, in the adherent coating.

3. A method as claimed in claim 2 wherein the second material is a water-soluble salt provided, in step (i), in the form of an aqueous solution thereof in admixture with the precursor and wherein step (ii) is carried out by heat treating.

4. A method as claimed in claim 3 wherein the salt is a hydrogen carbonate or an ammonium salt.

5. A method as claimed in any of the preceding claims wherein an additional ingredient for producing an additional optical effect is applied to the surface in step (i).

6. A method as claimed in claim 1 wherein the second material is provided in solution in step (i) and is crystallisable under the conditions of step (ii) to generate light scattering crystals in the adherent coating.

7. A method as claimed in any of the preceding claims wherein the precursor is a precursor for silica, either alone or in combination with alumina.

8. A method as claimed in claim 7 wherein the precursor is a water-soluble silicone and is in admixture with an aqueous colloidal dispersion of a refractory oxide.

9. A method as claimed in claim 8 wherein the dispersion is a silica sol.

10. A method as claimed in any of the preceding claims wherein the glass surface is the internal surface of an electric light bulb.